# EUROPEAN PATENT APPLICATION

(11) **EP 2 023 608 A2**
(43) Date of publication of application: **11.02.2009**
(21) Application number: 08160442.3
(22) Date of filing: 15.07.2008
(51) Int. Cl.: H04N 5/225

(54) **Image data display method and mobile terminal using the same**

(30) Priority: 24.07.2007 KR 20070074197
(71) Applicant: Samsung Electronics Co., Ltd., Suwon-si, Gyeonggi-Do (KR)
(72) Inventor: Kim, Eun Sun, Gyeonggi-do (KR); Chun, Young Deok, Gyeonggi-do (KR); Ahn, Chang Hyun, Gyeonggi-do (KR); Kim, Mi Su, Gyeonggi-do (KR)
(74) Representative: Harrison Goddard Foote

(57) **Abstract**

An image data display method and a mobile terminal using the image data display method is provided for minimizing image processing delay. An image data display method of the present invention includes color-converting a first format image data acquired by a camera into a second format image data; displaying the second format image data; and converting the second format image data into a third format image data.

## Description

### CROSS-REFERENCE TO RELATED APPLICATION(S) AND CLAIM OF PRIORITY

The present application claims priority to an application entitled "IMAGE DATA DISPLAY METHOD AND MOBILE TERMINAL USING THE SAME" filed in the Korean Intellectual Property Office on July 24, 2007 and assigned Serial No. 2007-0074197, the contents of which are incorporated herein by reference.

### TECHNICAL FIELD OF THE INVENTION

The present invention relates to a mobile terminal and, in particular, to an image data display method and mobile terminal using the image display method that is capable of minimizing image processing delay.

### BACKGROUND OF THE INVENTION

With the advance of technologies, mobile phones are equipped with a digital camera. Typically, the raw format digital image captured by a built-in camera is coded in a JPEG (Joint Photographic coding Experts Group) format, and the JPEG format image is decoded into a RGB (Red, Green, and Blue) format image to be displayed on the screen.

However, the conventional image processing method has a drawback in that redundant data conversion steps increase image display delay time.

### SUMMARY OF THE INVENTION

To address the above-discussed deficiencies of the prior art, it is a primary object to provide an image data display method and mobile terminal using the image data display method that is capable of shortening image display delay time.

Also, the present invention provides an image data display method and a mobile terminal using the same that is capable of minimizing processing delay required for displaying an image by converting raw image data acquired by a built-in camera to an RGB image data.

In accordance with an exemplary embodiment of the present invention, an image data display method for a camera-enabled mobile terminal includes color-converting a first format image data acquired by a camera into a second format image data; displaying the second format image data; and converting the second format image data into a third format image data.

In accordance with another exemplary embodiment of the present invention, a mobile terminal includes a camera acquiring a first format image data; an auxiliary controller for color-converting the first format image data into a second format image data and compressing the second format image data into a third format image data; a display for displaying the second format image data; and a main controller for instructing the auxiliary controller to save the third format image data.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 is a block diagram illustrating a configuration of a mobile terminal according to an exemplary embodiment of the present invention; and

FIGURE 2 is a message flow diagram illustrating an image data display method according to an exemplary embodiment of the present invention.

### DETAILED DESCRIPTION OF THE INVENTION

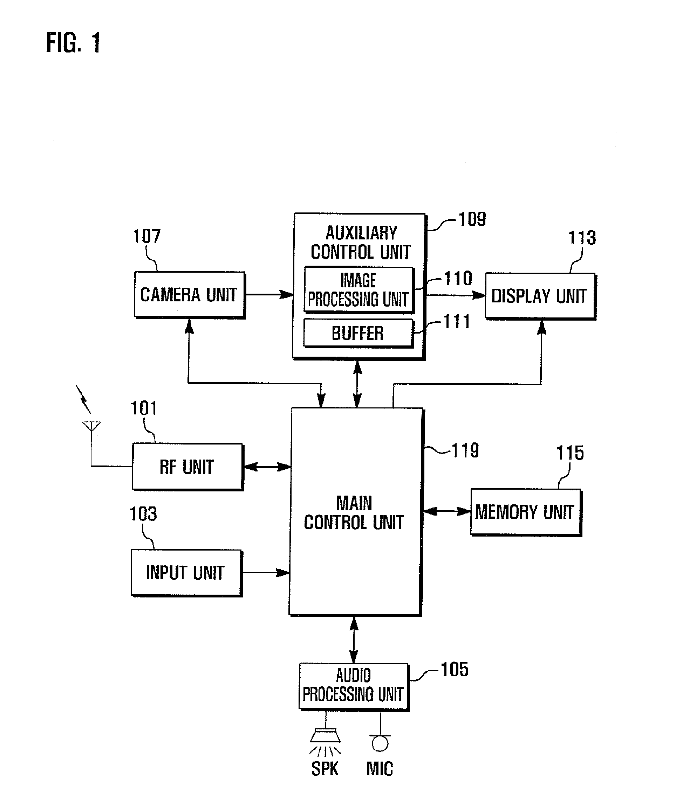

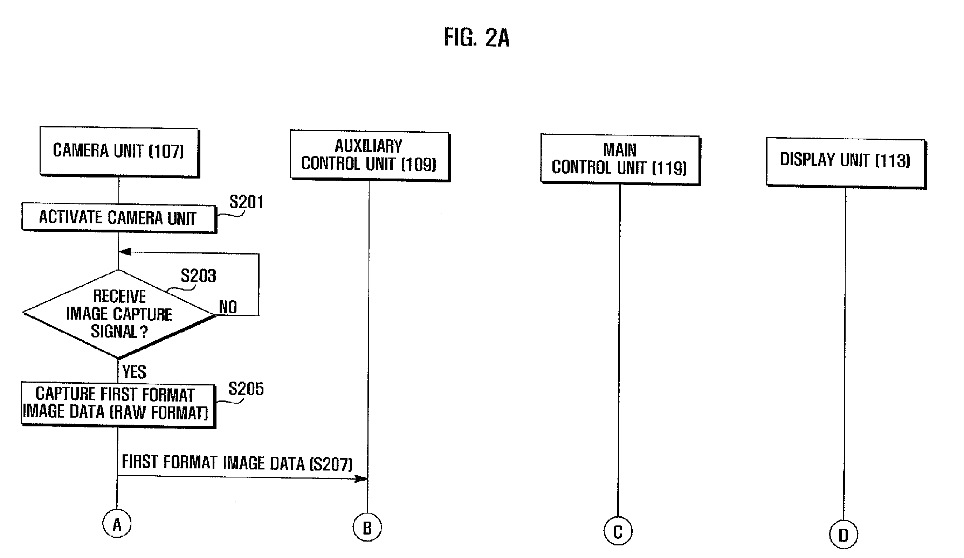

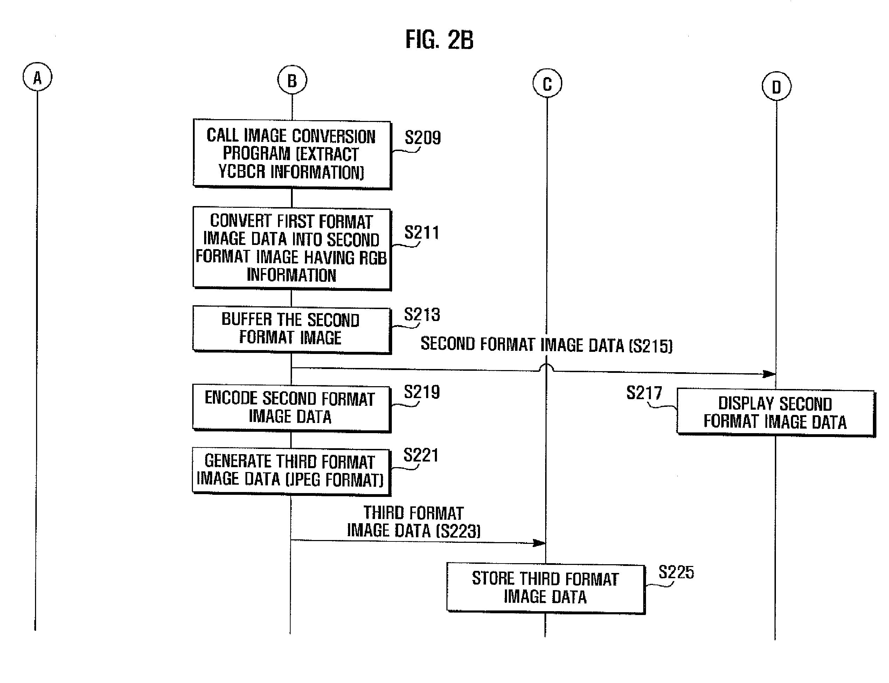

FIGURES 1 and 2, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile terminal.

In the following, the image data display method is described in association with a mobile terminal equipped with a built-in camera. The mobile terminal can be any of mobile phone, personal digital assistant (PDA), smartphone, dedicated digital camera, and laptop computer.

FIGURE 1 is a block diagram illustrating a configuration of a mobile terminal according to an exemplary embodiment of the present invention.

Referring to FIGURE 1, the mobile terminal includes a radio frequency (RF) unit 101, an input unit 103, an audio processing unit 105, a camera unit 107, an auxiliary control unit 109, a display unit 113, a memory unit 115, and a main control unit 119. The auxiliary control unit 109 includes an image processor 110 and a buffer 111.

The RF unit 101 is responsible for radio communication of the mobile terminal with a mobile communication network. For example, the RF unit 101 performs transmitting and receiving of radio signals corresponding to voice, text message, and multimedia data.

The input unit 103 generates key signals corresponding to key inputs and transmits the key signals to the main control unit 119. The input unit 103 can be implemented with at least one of keypad, touchscreen, touchpad, and scroll wheel.

The audio processing unit 105 converts the analog audio signal input through a microphone (MIC) to digital audio data and transmits the digital audio data to the main control unit 119. The audio processing unit 105 also converts the digital audio data output by the main control unit 119 to analog audio signal and outputs the analog audio signal through a speaker (SPK) in the form of audible sound wave.

The camera unit 107 is provided with an image sensor for converting optical images into electrical signals and a signal processor for converting analog signals corresponding to the electrical signals into digital data. The camera unit 107 converts the optical signals input through a set of lenses into digital signals and outputs the digital signals as a first format image data. At this time, the first format image data is called raw format image data which may include YUV information (hereinafter, referred to as YCbCr).

The first format image data refers to digital image data output by the signal processor of the camera unit 107. In this embodiment, it is assumed that the first format image data include the YCbCr information.

The auxiliary control unit 109 processes the first format image data captured by the camera unit 107 so as to be compliant with a display format of the display unit 113. The image processor 110 of the auxiliary control unit 109 can convert the first format image data into a second format image data that can be used in the mobile terminal and into a third format image data as a compressed image.

The image processor 110 extracts the YCbCr information from the first format image data and converts the first format image data into the second format image data using the YCbCr information. The second format image data may have RGB information. The second format image data also may have HSI (Hue, Saturation, and Intensity) information or CMYK (Cyan, Magenta, Yellow, and Black) information.

The main control unit 119 controls the buffering of the second format image data output by the image processor 110 in the buffer 111 and the display of the second format image data by the display unit 113.

The image processor 110 may include an encoder (not shown) for encoding the second format image data into the third format image data of JPEG format and a decoder (not shown) for decoding the third format image data into the second format image data. The image processor 110 transmits the third format image data obtained by encoding the second format image data to the memory unit 115.

The image processor 110 decodes the third format image data into the second format image data available for the mobile terminal. The third format image data is not limited to the JPEG formation. For example, the third format image data could be a TIFF (Tagged Image File Format) format.

The display unit 113 displays operational status of the mobile terminal and various other information under the control of the main control unit 119 or the auxiliary control unit 109. The display unit 113 can be implemented with a display device such as a liquid crystal display (LCD) and organic light emitting diodes (OLED). The display unit 113 is configured to display a preview image captured by the camera unit 107 under the control of the auxiliary control unit 109. At this time, the preview image can be the second format image data obtained from the first format image data through a color conversion process. In response to an image data acquisition instruction, the display unit 113 displays the second format image data buffered in the buffer 111 under the control of the auxiliary control unit 109.

The memory unit 115 stores information related to the operations of application programs installed on the mobile terminal under the control of the main control unit 119. The information includes settings and menus of the functions of the mobile terminal. Particularly in this embodiment, the memory unit 115 stores an information conversion program for converting the YCbCr information extracted from the first format image data into the corresponding RGB information. The memory unit 115 also stores the third format image data obtained by encoding the second format image data under the control of the main control unit 119.

The main control unit 119 controls general operations of the mobile terminal. The main control unit 119 may include a modem and a codec for performing modulation/demodulation and coding/decoding on the transmission and reception signals. The main control unit 119 also controls the auxiliary control unit 109. The main control unit 119 controls the display of the second format image data output by the image processor 110 of the auxiliary control unit 109 on the screen of the display unit 113. The main control unit 119 also instructs the auxiliary control unit 109 to decode the third format image data stored in the memory unit 115 such that the display unit 113 displays the second format image data decoded from the third format image data.

FIGURE 2 is a message flow diagram illustrating an image data display method according to an exemplary embodiment of the present invention.

Referring to FIGURES 1 and 2, first the camera unit 107 is activated (S201). If the camera unit 107 is activated, the auxiliary control unit 109 converts the first format image data received from the camera unit 107 into the second format image data so as to be output through the display unit 113 in the form of a preview image. In more detail, the auxiliary control unit 109 performs resizing and color conversion on the first format image data acquired by the camera unit 107 such that the converted second format image data are displayed through the display unit 113 in the form of a preview image. While acquiring the first format image data, the camera unit 107 determines whether an image acquisition signal is received from the main control unit 119 (S203). If an image capture signal is received, the camera unit 107 captures an image (S205). At this time, the main control unit 119 instructs the camera unit 107 to transmit the captured image data to the auxiliary control unit 109. Here, the captured image data is the first format image data of raw format having the YCbCr information. The image acquisition signal can be a save command signal for saving the image data captured by the camera unit 107 or a capture command signal for capturing the image data received from the camera unit 107.

After capturing the first format image data, the camera unit 107 transmits the first format image data of raw format to the auxiliary control unit 109 under the control of the main control unit 119 (S207).

Upon receiving the first format image data, the auxiliary control unit 109 calls the image conversion program stored in the memory unit 115 (S209). The image conversion program is provided with image conversion equations for converting the YCbCr information extracted from the first format image data into RGB information as following:

R=Y+1.402*Cr

G=Y-0.334*Cb-0.713*Cr

B=Y+1.772*Cr.

Next, the auxiliary control unit 109 instructs the image processor 110 to convert the YCbCr information from the first image into RGB information using the image conversion program (S211). In doing so, the auxiliary control unit 109 instructs the image processor 110 to convert the first format image data into the second format image data having RGB information. The image conversion is performed in order to obtain image data compliant with the display format of the display unit 113. Although the second format image data are described as including RGB information in this embodiment, the present invention is not limited thereto. For example, the second format image data can include HSI or CMYK information.

After converting the first format image data into the second format image data, the auxiliary control unit 109 controls the buffering of the second format image data in the buffer 111 (S213). Next, the auxiliary control unit 109 controls the transmission of the buffered second format image data to the display unit 113 (S215) and also controls the display of the buffered second format image data on the display unit 113 (S217).

While the display unit 113 displays the second format image data, the auxiliary control unit 109 instructs the image processor 110 to encode the second format image data (S219) and generate the third format image data (S221). The third format image data are obtained by compressing the second format image data. Although the third format image data is described as having the JPEG format in this embodiment, the third format image data can be of the TIFF format or the like.

Next, the auxiliary control unit 109 instructs the image processor to output the third format image data to the main control unit 119 (S223). The main control unit 119 stores the third format image data output from the image processor 110 in the memory unit 115 (S225).

Although not shown in the drawings, if a signal for calling the third format image data of JPEG format stored in the memory 115 is input after terminating the display of the second format image data, the main control unit 119 causes the third format image data stored in the memory unit 115 to be decoded into the second format image data so as to be displayed by the display unit 113.

Also, if a display termination signal is input through the input unit 103 while the second format image data is displayed, the main control unit 119 instructs the auxiliary control unit 109 to discard the second format image data buffered in the buffer 111.

As described above, the image data display method of the present invention minimizes image processing delay time by reducing redundant conversion processes.

Also, the image data display method of the present invention enables converting raw image data captured by an inbuilt camera of a mobile terminal into RGB image data using YCbCr information extracted the raw image data, thereby reducing display delay time of the image with reduced number of conversion processes.

Although the present disclosure has been described with an exemplary embodiment, various changes and modifications may be suggested to one skilled in the art. It is intended that the present disclosure encompass such changes and modifications as fall within the scope of the appended claims.

## Claims

1. An image data display method for a camera-enabled mobile terminal, comprising:
obtaining a first format image data through a camera;
color-converting the first format image data into a second format image data;
buffering the second format image data;
displaying the second format image data;
compressing the second format image data into a third format image data; and
storing the third format image data.

2. The image data display method of claim 1, wherein the first format image data are raw data obtained by converting optical signals captured by the camera into electrical signals.

3. The image data display method of any of claims 1 and 2, wherein the second format image data are one of RGB (Red, Green, and Blue) format data, HSI (Hue, Saturation, and Intensity) format data, and CMYK (Cyan, Magenta, Yellow, and Black) data compliant with a display format of the mobile terminal.

4. The image data display method of any of claims 1 to 3, wherein the third format image data are one of JPEG (Joint Photographic coding Experts Group) format image data and TIFF (Tagged Image File Format) format image data obtained by compressing the second format image data.

5. A mobile terminal comprising:
a camera for acquiring a first format image data;
an auxiliary controller having an image processor for color-converting the first format image data into a second format image data and compressing the second format image data into a third format image data and a buffer for buffering the second format image data;
a display for displaying the second format image data; and
a main controller for controlling the auxiliary controller to save the third format image data.

6. The mobile terminal of claim 5, further comprising a memory, wherein the auxiliary controller controls the storage of the third format image data in the memory.

7. The mobile terminal of any of claims 5 and 6, wherein the first format image data is raw image data obtained by converting optical signals captured by the camera into digital signals.

8. The mobile terminal of any of claims 5 to 7, wherein the second format image data are one of RGB (Red, Green, and Blue) format image data, HSI (Hue, Saturation, and Intensity) format image data, and CMYK (Cyan, Magenta, Yellow, and Black) image data compliant with a display format of the display.

9. The mobile terminal of any of claims 5 to 8, wherein the third format image data are one of JPEG (Joint Photographic coding Experts Group) format image data and TIFF (Tagged Image File Format) format image data obtained by compressing the second format image data.
